# EUROPÄISCHE PATENTSCHRIFT

(11) **EP 1 183 641 B1**
(45) Veröffentlichungstag und Bekanntmachung des Hinweises auf die Patenterteilung: **04.12.2002**
(21) Anmeldenummer: 00945729.2
(22) Anmeldetag: 09.06.2000
(51) Int. Cl.: G06K 19/06, G06K 7/14

(54) **VERFAHREN UND VORRICHTUNG ZUR SYNCHRONISATION BEI KODIERUNG UND DEKODIERUNG VON IN DATENSTREIFEN GEDRUCKTEN DATEN**
METHOD AND DEVICE FOR SYNCHRONISATION IN THE ENCODING AND DECODING OF DATA THAT ARE PRINTED IN DATA TAPES
PROCEDE ET DISPOSITIF POUR LA SYNCHRONISATION LORS DU CODAGE ET DU DECODAGE DE DONNEES IMPRIMEES EN BANDE

(30) Priorität: 09.06.1999 DE 19926197
(43) Veröffentlichungstag der Anmeldung: 06.03.2002
(73) Patentinhaber: Datasound Gesellschaft zur Entwicklung und Vermarktung Digitaler Audio- und Informationssysteme GmbH, 67061 Ludwigshafen (DE)
(72) Erfinder: WIRNITZER, Bernhard, D-69502 Hemsbach (DE); BRUGGER, Andreas, D-67227 Frankenthal (DE); KRÜGER, Tilmann, D-67112 Mutterstadt (DE); MEINERZ, Detlev, D-68161 Mannheim (DE)
(74) Vertreter: Grussdorf, Jürgen, Dr.
(86) Internationale Anmeldenummer: EP0005329
(87) Internationale Veröffentlichungsnummer: WO00077725

(56) Entgegenhaltungen:
- DE-A- 4 107 020
- US-A- 5 170 044

## Beschreibung

Die Erfindung betrifft Verfahren zur Synchronisation bei Kodierung und Dekodierung von Daten auf gedruckten Unterlagen, insbesondere von in Datenstreifen mit flächig gespeicherter Information angeordneten Daten, die mittels eines Lesegerätes mit linearem oder flächigem Sensor ausgelesen werden können, wobei bei der Kodierung der Daten geeignete zweidimensionale Synchroninformationen in den Datenkodes intergriert und diese beim Dekodieren zum Nachstellen eines zweidimensionalen adaptiven Synchronfilters genutzt wird sowie eine Vorrichtung zur Durchführung der Verfahren, wobei die optisch erfaßbare Information typischerweise mit einem CCD-Zeilensensor oder einem CCD-Bildsensor ausgelesen wird.

Zur Speicherung relativ kleiner Informationsmengen auf Teilen sind Balkenkodes (Barkodes) in eindimensionalem Aufbau seit langem bekannt und allgemein üblich. Um eine Information zu kodieren, werden Balken und deren Abstände in verschiedenen Breiten auf den Gegenstand aufgebracht. Ein Lesegerät kann das Balkenmuster aufnehmen und die Information dekodieren. Obwohl das Balkenmuster eine Fläche belegt, ist die Information nur eindimensional angeordnet. Bei einer schräg über die Balken verlaufenden Abtastung durch das Lesegerät ändern sich die Breiten der Balken, das Verhältnis der beiden Breiten bleibt jedoch konstant, so daß die Synchronisation zwischen Abtastung und Balkenmuster sehr einfach und allgemein bekannt ist. Die Datendichte derartiger Kodes liegt wegen der relativ groben und eindimensionalen Datenstruktur aber nur bei wenigen Bits pro Quadratzentimeter Druckfläche.

Zweidimensionale Balkenkodes, die weniger gebräuchlich sind, enthalten etwas größere Informationsmengen. Üblich sind für Datenstreifen mit Balkenkodes je nach Verwendungsbereich verschiedene Kodes, beispielsweise EAN. Eine Erhöhung der Datensicherheit durch Einbau von Redundanz ist in der US 3 211 470 dargestellt.

Um höhere Datendichten zu erreichen, werden Datenstreifen aus mehreren Datenlinien aufgebaut und mit Strukturen zur Synchronisation ergänzt. In der WO 86/05906 wird ein solcher Datenstreifen beschrieben, welcher spezielle Synchronisationsgebiete enthält, die dazu dienen, das optische Lesegerät auf die Datenlinien auszurichten und die sogenannte Scan-Rate zu steuern, mit der das Lesegerät Zeile für Zeile aufnimmt, während es über einen Datenstreifen geführt wird. Innerhalb einer Zeile wird linear interpoliert, eine Synchronisation findet also innerhalb der Zeile nicht statt. In der DE 41 07 020 A1 werden solche Synchronisationsgebiete rechnerisch ausgewertet.

In der EP 0 670 555 A1 sind die Synchronisationsgebiete in Form von Rändern von Teilgebieten des Datenstreifens vorgesehen. Die Firma Gobblestone Software Inc. beschreibt unter www.paperdisk.com ein Verfahren mit Synchronmarken als zweidimensionale Erweiterung von Balkenkodes. Sie will damit Datendichten von bis zu 4 Megabyte auf einen Blatt von 8 Zoll mal 11 Zoll in Form sogenannter Datenfliesen unterbringen können.

Ein Nachteil der bekannten Datenstreifen, welche aus einer Vielzahl von Datenlinien, d. h. aus in Zeilen und Spalten angeordneten Informationspunkten, bestehen, ist die geringe erreichbare Datendichte.

Dies ist darin begründet, daß die verwendeten Verfahren und Vorrichtungen zur Kodierung und Dekodierung der gespeicherten Daten voraussetzen, daß die Anordnung der Datenlinien und damit auch der Informationspunkte bezüglich der Auflösung des Sensors ausreichend geradlinig ist, eine rechteckförmig gedachte Datenstruktur aus Datenlinien auch durch störende Einflüsse zumindest viereckförmig mit geraden Datenlinien bleibt und daß die Datenstruktur durch eine Drehoperation und/oder eine lineare Entzerrung wieder in die ursprüngliche Form zurücktransformiert werden kann.

Diese Voraussetzungen sind aber nur für relativ kleine Informationsmengen gut einzuhalten, da es sehr schwierig und aufwendig ist, bezogen auf die Maße eines Datenpunktes lange gerade Linien, also Linien aus vielen Datenpunkten, technisch zu erzeugen und zusätzlich die Verformung der Datenlinien durch störende Einflüsse, wie beispielsweise Feuchtigkeit bei einem Datenträger aus Papier, zu verhindern und sie zudem noch auf dem Sensor des Lesegerätes geradlinig abzubilden.

Deshalb wurde in der EP 0 670 555 A1 vorgeschlagen, das Datenfeld in viele Teilgebiete mit jeweils eigenen Synchronisationsrahmen aufzuteilen. Die Transformation jedes vom Sensor erfaßten Teilgebietes in die Zielkoordinaten zur Erzielung der ursprünglich gedachten Datenstruktur erfolgt dort von außen über den Synchronisationsrahmen gesteuert und somit unabhängig vom Inhalt des Teilgebietes. Eine innerhalb der Teilgebiete wünschenswerte innere Synchronisation findet jedoch nicht statt.

Aus der US 5,706,099 ist ferner ein Verfahren zum Erfassen kodierter Datenstreifen bekannt, wobei separate Zellen vorausgesetzt werden. Die Beabstandung ist dabei unumgänglich, da die Informationen in den Zellen sonst nicht unterschieden werden können. Eine hohe Datendichte ist damit nicht erreichbar, nicht beabsichtigt und für den dort vorliegenden Anwendungszweck (Postversand) auch nicht erforderlich.

Die bekannten Techniken weisen somit nur eine geringe speicherbare und fehlerarm auslesbare und dekodierbare Informationsdichte auf. Die damit für bestimmte Datenmengen erforderliche Fläche ist für die praktische Anwendung zu groß.

Eine Möglichkeit zur Erhöhung der Datendichte bei den bekannten Kodes ist die Verkleinerung der Druckpunkte Hierbei nehmen jedoch typische Abbildungsfehler, wie Verzeichnung, Astigmatismus, Koma und Schattenbilder, wie sie durch Reflexionen an parallelen Platten entstehen deutlich zu. Der Druckprozeß und die Abbildungsoptik bedingen dann, daß die Synchronisationsstrukturen für das Lesegerät unscharf oder verzerrt erscheinen, die Synchronisation auf den Kode auch trotz aufwendiger Technik versagt und die Dekodierung fehlerhaft und damit unbrauchbar wird.

Für die Aufzeichnung hoher Datenmengen werden in der Technik üblicherweise zwei Grundprinzipien eingesetzt, nämlich die Aufzeichnung von Daten in parallelen Spuren auf bandförmigem Datenträger und die Aufzeichnung von Daten auf parallelen oder spiralförmigen Spuren auf rotierendem Datenträger.

Bei beiden Grundprinzipien wird eine lineare Anordnung in Datenlinien gewählt, wobei bei geringerer Datendichte die genaue Spurführung von der Präzision der mechanischen Führung von Band und Schreib-/Lesekopf abhängt, während bei höherer Datendichte ein Lesekopf der jeweils gewählten Datenlinie folgt. Das vom Lesekopf aus der erfaßten Information des Datenträgers gebildete Signal erfährt eine zeitliche, also eindimensionale, Synchronisation nach bekannten Verfahren.

Diese Verfahren der Synchronisation sind nur für eindimensionale Synchronisation über der Zeit entworfen, selbst wenn es sich um geometrisch zweidimensionale darzustellende Objekte handelt. So beschränkt sich beispielsweise die Synchronisation eines Fernsehbildes auf eine reine Zeitsynchronisation mit zeitlichen Synchronimpulsen für Zeile und Bild.

Mit den bekannten Synchronisationsverfahren ist es nicht ohne weiteres möglich, einen aus einer großen Anzahl von linear oder flächig angeordneten Sensorelementen bestehenden Sensor, wie CCD-Zeilensensor oder CCD-Flächensensor, zu verwenden. Da bei diesen Bildsensoren zur Informationsübertragung vom Datenträger auf den Sensor gleichzeitig relativ viele Datenpunkte abgetastet werden, müßte dieser dem geometrischen Verlauf der gleichzeitig auf ihm abgebildeten Datenpunkte folgen, wozu aber eine punktförmige und nicht geradlinig verlaufende Abtastung erforderlich wäre. Falls die Sensorzellen nicht wesentlich kleiner als das Synchronisationsraster sind, versagt in diesem Fall die Synchronisation.

Die Nachteile kleiner Sensorzellen sind jedoch die geringe Lichtempfindlichkeit, der hohe Preis der Sensoren und die hohe Datenmenge beim Auslesen.

Nachteilig an den bekannten Verfahren ist auch die Empfindlichkeit gegen Verschmutzungen, Abnützung oder Verformungen des Datenträgers. Weiterhin sind die groben Daten- und Synchronisationsstrukturen für das menschliche Auge erkennbar und können in verschiedenen Anwendungen und auch bei der Überlagerung zusätzlicher visueller Information störend wirken.

Entscheidend für die erreichbare Datenmenge eines zweidimensionalen Datenstreifens sind seine Abmessungen und die einwandfrei dekodierbare Datendichte. Je größer diese beiden Werte gewählt werden, desto aufwendiger und schwieriger wird die erforderliche Synchronisation.

Die Erfindung hat sich daher die Aufgabe gestellt, auf einem Datenstreifen eine hohe Datendichte zu ermöglichen, wobei eine Kodierung, fehlerarme Dekodierung und korrekte Synchronisierung auch bei erheblichen störenden, auch nichtlinearen, Einflüssen gewährleistet ist, und, daß daruberhinaus die Kodestrukturen so dimensioniert werden können, daß sie mit dem bloßen Auge nicht erkennbar sind und der gespeicherten Information zusätzliche visuelle Information überlagert werden kann.

Die Aufgabe wird durch ein Verfahren zur Synchronisation bei der Dekodierung von auf Datenstreifen mit hoher Datendichte in zweidimensional auf dem Datenstreifen positionierten Zellen abgelegter Speicherinformation mit Hilfe eines Flächen- oder Zeilensensors gelöst, wobei zunächst eine Vorschrift gebildet wird, die die relative Lage der Felder des Sensors in Bezug auf die Position der Zeilen beschreibt und diese Vorschrift mittels der durch Sensorsignale der Sensorfelder ermittelbaren relativen Lage von Kanten oder inneren Strukturen der Zellen fortlaufend in beiden Dimensionen nachgeführt wird und durch ein Verfahren zur Synchronisation bei der Kodierung dieser Information, wobei in die innere Struktur der zweidimensional auf dem Datenstreifen positionierten und die abgelegte Speicherinformation enthaltenden Zellen eine zweidimensionale Synchroninformation integriert wird, sowie durch eine Vorrichtung, die einen Detektor aufweist, welchem die Sensordaten zugeführt werden und der daraus die Lage einer Zelle in Bezug auf das Sensorkoordinatensystem und ihren Informationsgehalt ermittelt.

Unter Synchronisation wird allgemein die Herstellung des Gleichlaufes zwischen zwei Vorgängen verstanden, dementsprechend genügt ein Zeitbezug. Damit ergibt sich für ein eine Synchronisation realisierendes Verfahren also auch der Bezug auf eine einzige Dimension, die Zeit. Bei der Übertragung von Verfahren und Vorschriften der Nachrichtentechnik auf die Optik wird üblicherweise die Zeit durch eine örtliche Dimension ersetzt, so daß der Begriff der Synchronisation analog auf die Herstellung abbildender Vorschriften angewandt wird.

Unter Vorschriften im Sinne der Erfindung werden Regeln zur Abbildung eines Koordinatensystems auf ein anderes verstanden. Dies können auch Beziehungen, Gleichungen, Funktionen oder Algorithmen sein. Die Technik spricht hier von "Abbildungsvorschriften". Zur Durchführung eines erfindungsgemäßen Verfahrens kann die Umsetzung der Vorschriften in Algorithmen vorteilhaft sein.

Die Synchronisation der vom Sensor eines Lesegerätes von einem Datenstreifen ausgelesenen Information ist erfindungsgemäß zweidimensional und bezieht sich wegen Abbildungs- und Abtastfehlern sowie Änderungen der abzutastenden Fläche, beispielsweise durch Feuchtigkeit bei einem Datenträger aus Papier, auf ein Koordinatensystem, das möglicherweise weder orthogonal noch gradlinig noch gleichmäßig geteilt ist.

Nur bei relativ geringer Datendichte und kleiner Flächenausdehnung eines durch Synchronrahmen eingegrenzten zu lesenden Bereiches des Datenstreifens könnte auf eine Synchronisation innerhalb eines solchen Bereiches, also auf innere Synchronisation verzichtet werden, das sich ergebende Koordinatensysten des Bereichsbildes linear angenähert und die ausgelesene Information durch übliche Koordinatentransformation in das den ursprünglichen Daten entsprechende Zielkoordinatensystem transformiert werden.

Erfindungsgemäß wird bei der Kodierung der Daten eine geeignete zweidimensionale Synchroninformation in die durch die Daten bestimmten Muster integriert und beim Dekodieren zum Nachstellen eines zweidimensionalen adaptiven Synchronfilters genutzt, so daß auch Datenstreifen mit großen Abmessungen, die nur einen einzigen nicht durch Synchronmarken unterbrochenen zu lesenden Bereich aufweisen, sehr dicht kodiert und fehlerarm dekodiert werden können.

Ein Datenstreifen wird dabei zweidimensional in periodisch wiederholbare Zellen untergliedert. Die zu kodierende Information, welche in diesen Zellen abgelegt wird, ist dagegen zumindest dreidimensional strukturiert, wobei z. B. eine Dimension der Länge des Datenstreifens, eine weitere seiner Breite und die dritte der Informationstiefe jeder Zelle des Datenstreifens entspricht.

In Sonderfällen kann jede der drei Dimensionen die Länge 1 haben, beispielsweise der Datenstreifen nur aus einer Zeile oder einer Spalte bestehen oder nur ein Bit pro Zelle abgespeichert werden.

Auch die Hinzunahme weiterer Dimensionen entsprechend technischen Merkmalen eines Datenstreifens ist möglich. So kann beispielsweise eine Dimension der Tiefe im Datenstreifen bei mehrlagigen Datenstreifen entsprechen, eine oder mehrere den Farbdimensionen der für den Kode auf dem Datenstreifen aufgebrachten Farbe.

Hohe Informationsdichten können vorteilhaft dadurch erreicht werden, daß in einer Zelle mehrere Informationsbits gespeichert werden, wobei zu jeder möglichen Kombination von in einer Zelle speicherbaren Informationsbits ein eigenes Muster gehört.

Die Zellen weisen bevorzugt eine rechteckige Form auf und werden orthogonal aneinandergesetzt. Sie können aber auch andere Formen haben und z. B. parkettartig zu einem Datenstreifen zusammengesetzt werden. Die Zellen können zudemm aus einem oder mehreren Feldern bestehen.

Bei einem ausgedehnten Koordinatensystem, das über die Fläche des Datenstreifens betrachtet keine genau bekannte oder zumindest konstante Teilung noch einen genau bekannten oder zumindest konstanten Winkel zwischen den Achsen aufweist, muß das Koordinatensystem in beiden Achsen mit fortlaufendem Abtastprozeß fortlaufend synchronisiert werden. Nur dadurch wird eine fortlaufende Zuordnung der Information einer Zelle des Datenstreifens, die aus der mit dem Sensor ermittelten Bildintensität der Felder dieser Zelle ermittelt wird, zu den Zielkoordinaten ermöglicht.

Dazu wird erfindungsgemäß ein mathematisches Modell der Synchronisation, das eine Abbildung der durch verschiedene Einflüsse, wie Feuchtigkeit oder Fehler der optischen Abbildung, nichtlinear verfälschten Koordinaten des Datenstreifens in das Zielkoordinatensystem beschreibt, fortlaufend adaptiv im Sinne einer adaptiven Regelung korrigiert.

Als Grundstruktur dieses mathematischen Modells dient vorteilhaft ein zweidimensionales Netz aus viereckigen Maschen, das eine relativ feine Struktur, also kleine Maschengröße benötigt, und bei dem die Koordinaten innerhalb einer Masche zweidimensional linear interpoliert werden. Bevorzugt wird jedoch ein zweidimensionaler Spline, beispielsweise ein B-Spline, welcher erheblich weniger Stützpunkte benötigt aber sehr gut an die Eigenschaften der Regelstrecke anpaßbar ist.

Für den Fall, daß jede Zelle nur aus einem Feld besteht, wird in einer besonders bevorzugten Ausgestaltung der Erfindung die Anzahl derjenigen Zellen, welche die gleiche Information aufweisen, in den weiteren Dimensionen der Information (z. B. Länge und Breite des Datenstreifens) beschränkt.

Die innere zweidimensionale Synchronisation erfolgt erfindungsgemäß dann an den Zellenrändern. Werden beispielsweise rechteckige Zellen in dichter und orthogonaler Packung verwendet, so wird mit den Übergängen zwischen Zellen mit unterschiedlicher Information in einer der beiden Dimensionen des Datenstreifens, z. B. in Zeilenrichtung, aus der Position des Übergangs die der aktuellen Zeilenposition zuzuordnende Spaltensynchronisationsinformation ermittelt. Mit den Übergängen zwischen Zellen mit unterschiedlicher Information in der zweiten Dimension, z. B. der Spaltenrichtung, wird dann die der aktuellen Spaltenposition zuzuordnende Zeilensynchronisationsinformation ermittelt.

Der Vorteil der Beschränkung der Anzahl von Zellen mit gleicher Information in der zweiten Dimension, beispielsweise der Spaltenrichtung, ist, daß verhindert wird, daß mehr als eine einstellbare Anzahl gleicher Zeilen oder gleicher Teile von Zeilen auf dem Datenstreifen dargestellt wird.

Es gibt eine Reihe von geeigneten Methoden, die erfindungsgemäß eingesetzt werden können diese Ziele zu erreichen, wobei diese einzeln oder in Kombination gewählt werden können. So beispielsweise die Aufnahme von Angaben über eine Anzahl von Wiederholungen, zusätzlich eingefügte Synchronmuster, die die Position von Datenkodes innerhalb einer Zeile beziehungsweise Spalte verschieben, die Aufnahme von Paritätsbits mit ungerader Parität für eine zu kodierende ungeradzahlige Anzahl von Datenbits oder Kodes, die sicherstellen, daß nicht alle Bits in den sich aus Datenbits und Paritätsbit ergebenden Kodewörtern von der Wertigkeit NULL oder EINS sind.

Weiterhin sind auch Methoden geeignet, wie sie zur Reduzierung der zu übertragenden Daten bei Facsimile-Verfahren eingesetzt werden.

Wird bei einer Kodierung von einem Bit pro Zelle auf eine innere Zellenstruktur verzichtet, so stellt beispielsweise eine schwarze Zelle eine NULL, eine weiße Zelle eine EINS dar. Die erfindungsgemäße zweidimensionale Synchronisation des Auslesens eines solchen Datenstreifens kann dann nicht an einer inneren Struktur der Zelle vorgenommen werden, sondern nur an ihren Außenkanten, und zwar dort, wo verschiedenfarbige Zellen aneinanderstoßen.

Solche Übergänge können zur zweidimensionalen Synchronisation herangezogen werden, wobei Übergänge mit im Sinne des Zielkoordinatensystems überwiegend horizontalem Verlauf zur Spaltensynchronisation und solche mit überwiegend vertikalem Verlauf zur Zeilensynchronisation verwendet werden. Dabei kann die Richtung des Überganges berücksichtigt werden, um bestimmte Eigenschaften der regelungstechnischen Strecke, wie beispielsweise die Kodierung, den Druck des Datenstreifens und die Abtastung einzubeziehen. So kann bei zum Verlaufen neigender Druckfarbe kompensiert werden, daß der Übergang von Schwarz nach Weiß in Richtung Weiß verschoben ist.

Das auf dem Sensor nach der Aufnahme durch das Lesegerät erwartete Bild möglicher Muster einer Zelle hängt von verschiedenen Einflußgrößen ab, darunter beispielsweise die Lage der Zelle auf dem Datenstreifen, die Druckfarbe, Eigenschaften unterschiedlicher Datenträgermaterialien, ungleichmäßige Abtastung oder Verzeichnungen der Optik.

Die Zellen werden vorteilhaft in ihrer Form, Lage und Gestaltung so ausgelegt, daß sie mit den eingesetzten Übertragungstechniken gut und sicher hergestellt werden können und nach der Übertragung vom Lesegerät möglichst gut erkannt , werden. So können erhebliche Verbesserungen z. B. beim Druck dadurch erreicht werden, daß der gewünschte Druckpunkt mit einem feineren Belichterraster erzeugt wird, also ein Druckfeld aus mehreren Belichterpunkten zusammengesetzt wird. Damit sind innere Strukturen der Felder erzeugbar, die störende Eigenschaften des Druckprozesses kompensieren können.
Darüber hinaus können Zellen aus mehreren Feldern bestehen.

Durch die Wahl von Form und Lage der Zellen und/oder der Felder in den Zellen ist es möglich, technische Randbedingungen der Strecke zwischen einer Kodierung der gewünschten Information und ihrer Dekodierung, wie beispielsweise verlaufende Druckfarbe, mangelnde Schärfe einer verwendeten Optik und/oder anisotropes Verhalten von Gliedern der Strecke, zu berücksichtigen.

So weisen in der Drucktechnik verwendete Belichter ein orthogonales Koordinatensystem ihrer zu belichtenden Punkte auf. Die Auflösung des Rasters liegt oft bereits bei acht Mikrometern, von weiteren Verfeinerungen ist auszugehen. Beim Druck eines Datenstreifens kann nicht unbedingt vorausgesetzt werden, daß auch so feine Druckpunkte sicher erzeugt werden können.

Vorteilhaft wird dementsprechend ein gröberes Punktraster für den Datenstreifen gewählt. So können Form und/oder Positionierung der Punkte auf dem Datenstreifen aber durch die Auswahl der einen Druckpunkt bestimmenden Rasterpunkte des Belichters und deren Lage in dessen Koordinatensystem gestaltet werden. Hat der Belichter beispielsweise ein Raster von acht Mikrometern, so kann bei einer Druckpunktgröße von 32 Mikrometern jeder Druckpunkt aus 16 Belichterpunkten zusammengesetzt und mit acht Mikrometern Ortsauflösung auf dem Datenstreifen positioniert werden.

Bevorzugt wird das aus den Zellen gebildete zweidimensionale Muster so gestaltet, daß es vom menschlichen Auge nicht auflösbar ist. Dies wird dadurch erreicht, daß die geometrische Struktur innerhalb der Zellen feiner als die Ortsauflösung des Auges und die durchschnittliche Farbe der benachbarten Zellen gleich sind. Jeder der möglichen Informationen einer Zelle ist erfindungsgemäß ein charakteristisches zweidimensionales Muster zugeordnet. So ist beispielsweise bei einer Informationstiefe von einem Bit pro Zelle eine Aufteilung der Zelle in zwei Reihen zu je zwei Feldern sinnvoll. Von den 16 möglichen Mustern sind sechs zur Hälfte schwarz, von denen zum Beispiel die zwei als charakteristische ausgewählt werden, die zwei schwarze Felder in diagonaler Anordnung aufweisen, wobei dem charakteristischen Muster mit der einen Diagonalenrichtung der Wert NULL, dem mit der anderen der Wert EINS zugeordnet wird. So wird das Muster, dem der Wert EINS zugeordnet ist, für den zu kodierenden Wert NULL durch sein Negativbild ersetzt.

Dies ist auch für komplexere innere Strukturen einer Zelle möglich, beispielsweise bei einem schwarzen Kreuz auf weißem Grund fur den Wert NULL und ein weißes Kreuz auf schwarzem Grund für den Wert EINS

Bei derartiger Innenstruktur von Zellen kann die für die Synchronisation benötigte Lageinformation in beiden Dimensionen bei jeder einzelnen Zelle ermittelt und der adaptiven Regelung zugeführt werden. Damit kann die Synchronisierung sehr fein und steif erfolgen, womit auch starke Verzerrungen ausgeregelt werden können. Ebenso ist es möglich, bei einer Zelle mit zwei Reihen zu je zwei Feldern vier charakteristische Muster entsprechend einer zu kodierenden Information von 2 Bits oder sogar sechs charakteristische Muster vorzusehen, die alle zur Hälfte schwarz sind. Für das Auge ergibt sich auch dann eine einheitliche unstrukturierte graue Fläche unabhängig von der kodierten Information.

Bei einer größeren Informationstiefe der Zellen erhöht sich die entsprechende Anzahl an notwendigen verschiedenen charakteristischen Mustern, bei vier Bit pro Zelle beispielsweise auf sechzehn. Eine vorteilhafte Aufteilung der Zelle in sechs Felder erlaubt die Verwendung von bis zu 20 charakteristischen Mustern, wenn als Vorbedingung gewählt wird, daß die Hälfte aller Felder schwarz sein soll. Werden geringere Anforderungen an die Gleichmäßigkeit der durchschnittlichen Farbe der Zellen gestellt, können zur Definition der charakteristischen Muster auch solche mit nur zwei weißen oder schwarzen Feldern mit herangezogen werden, um so beispielsweise 32 charakteristische Muster zu erhalten, mit denen fünf Bit pro Zelle kodiert werden können.

Bei einer Auswahl der verwendeten charakteristischen Muster, die gewählten vorgegebenen Randbedingungen genügen, aus einer größeren Anzahl möglicher charakteristischer Muster werden vorzugsweise zwei Kriterien verwendet, nämlich erstens eine weitgehende Vermeidung datentechnisch ähnlicher Muster und zweitens die Vermeidung optisch störender Muster.

Die zu kodierende Information kann die Dekodierung mit bestimmten Verfahren insbesondere bei Inanspruchnahme von Toleranzen erschweren. So ist im NRZ-Verfahren die Anzahl von aufeinanderfolgenden Bits der gleichen Wertigkeit NULL beziehungsweise EINS nur bei konstantem Takt fehlerfrei feststellbar. Bei der dreidimensionalen Strukturierung der zu kodierenden Information ist daher eine Lauflängenbegrenzung von Unterstrukturen mit gleicher Information zur Verbesserung der Synchronisation und/oder der optischen Gestaltung vorteilhaft. Auch kann die zu kodierende Information mit dem bloßen Auge erkennbare Strukturen hervorrufen. In diesem Fall ist es vorteilhaft, störende Unterstrukturen durch andere Unterstrukturen, denen die gewünschte Information zugewiesen wird, zu ersetzen.

Die Überlagerung von für das Auge erkennbarer bildhafter Information kann erfindungsgemäß durch Veränderung der Druckfarbe erfolgen, wobei diese für das Lesegerät weitgehend unbemerkt bleiben kann. Wird zum Beispiel ein optisches Lesegerät mit rotem Fenster beziehungsweise roter Beleuchtung verwendet, so erscheinen Druckfarben ohne Rotanteil, also grün, gelb, blau oder schwarz, für das Lesegerät in ähnlicher Bildintensität nicht jedoch für das Auge.

Während bei den bekannten Kodes mit hoher Datendichte wellige Unterlagen, verzogene Papierträger und geringe Ungleichmäßigkeiten bei der Bewegung des Lesegerätes besonders kritisch sind, weil die Synchronisation auf den Kode und das Abspeichern der ermittelten Daten ohne Versatz im Zielkoordinatensystem versagt, ist es bei dem erfindungsgemäßen Verfahren trotz erheblicher Welligkeiten möglich, die Synchronisation während des Abtastvorganges aufrechtzuerhalten. Sogar die sonst nötigen Gebiete mit Druckmustern zur Synchronisation können entfallen. Dies ist für einen grafisch ansprechend gestalteten Datenstreifen besonders wichtig.

Zum Dekodieren werden die Datenstreifen mit einem Gerät eingelesen, dessen Ortsauflösung vorteilhaft mindestens doppelt so hoch wie die des menschlichen Auges ist. Damit weisen die Sensoren des Lesegerätes ein örtliches Raster auf. Handelt es sich bei dem Sensor um einen relativ zum Datenstreifen bewegten Zeilensensor, so kann sich die örtliche Abtastfrequenz in Bewegungsrichtung mit der Abtastgeschwindigkeit ändern, während sich die örtliche Abtastfrequenz quer dazu beispielsweise durch Sensortoleranzen und Abbildungsfehler der Optik, die den Datenstreifen auf dem Sensor abbildet, ändern kann.

Im folgenden wird die Erfindung anhand von Zeichnungen und Ausführungsbeispielen erläutert. Dabei zeigen:
- **Fig. 1**: mögliche Kodierungen einer Zelle mit zwei Reihen zu je zwei Feldern,
- **Fig. 2**: mögliche Kodierungen einer Zelle gleicher durchschnittlicher Helligkeit mit drei Reihen zu je zwei Feldern,
- **Fig. 3**: ein Beispiel einer Zelle für auslaufende Druckfarbe,
- **Fig. 4**: zwei verschiedene Raster zur Positionierung der Zelle aus Figur 3,
- **Fig. 5**: den schematischen Aufbau einer Vorrichtung zur Durchführung der erfindungsgemäßen Verarbeitungsschritte zum Dekodieren des Kodes und
- **Fig. 6**: eine vereinfachte beispielhafte Darstellung gedruckter Zellen sowohl im Sensorkoordinatensystem als auch im Zielkoordinatensystem.

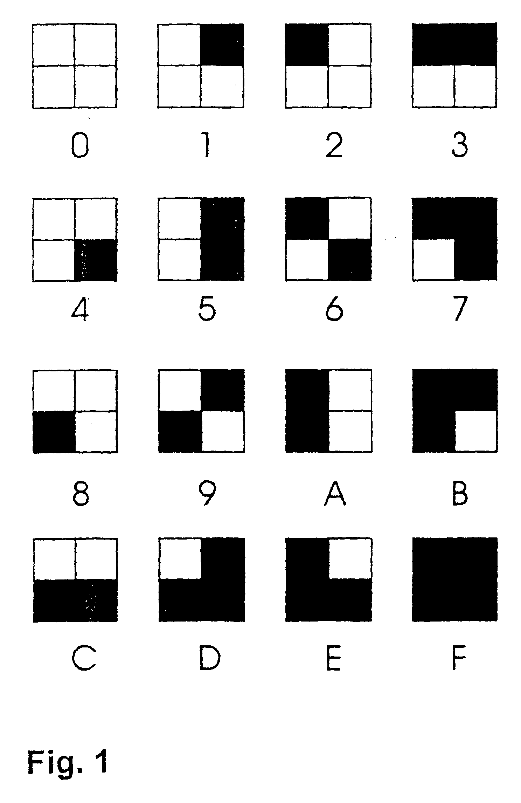

**Figur 1** zeigt alle Möglichkeiten der Kodierung einer Zelle mit zwei Reihen zu je zwei Feldern. Wird beispielsweise einem weißen Feld die Wertigkeit NULL und einem schwarzen Feld die Wertigkeit EINS zugewiesen, so ergibt sich in einer möglichen Gewichtung der Felder die jeweils unter der Zelle angegebene hexadezimale Kodierung zwischen 0 entsprechend 0H (dezimal 0) und F entsprechend FH (dezimal 15). Soll nur ein Bit Information in einer solchen Zelle kodiert werden, so ist die Wahl der Zellen 6, beispielsweise für die NULL, und 9, beispielsweise für die EINS, vorteilhaft, die beide die gleiche durchschnittliche Helligkeit aufweisen und bezüglich der visuellen Beurteilung eine besonders feine Struktur ergeben. Mit einem einfachen Detektor lassen sich zum ersten diese beiden Zellen von den anderen unterscheiden, zum zweiten das Informationsbit dekodieren und zum dritten die Lage der Zelle bezüglich des Rasters des Zielkoordinatensystems besonders genau bestimmen und so zur Regelung der Synchronisierung heranziehen.

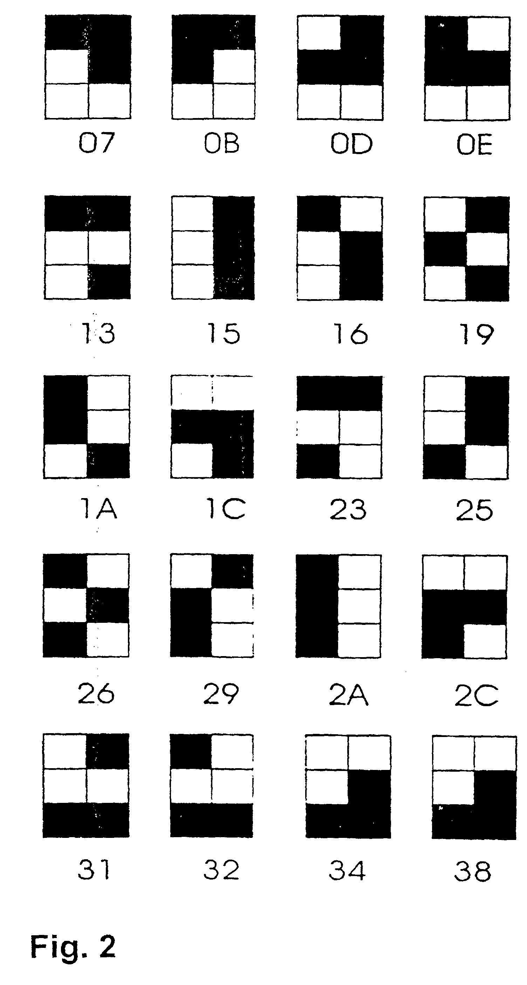

**Figur 2** zeigt von den 64 Möglichkeiten der Kodierung einer Zelle mit drei Reihen zu je zwei Feldern die 20 Möglichkeiten, bei denen die Hälfte der Felder einer Zelle schwarz ist. Wird beispielsweise einem weißen Feld die Wertigkeit NULL und einem schwarzen Feld die Wertigkeit EINS zugewiesen, so ergibt sich in einer möglichen Gewichtung der Felder die jeweils unter der Zelle angegebene hexadezimale Kodierung zwischen 00 entsprechend 00H (dezimal 0) und 3F entsprechend 3FH (dezimal 63). Verwendet man nur die dargestellten 20 Möglichkeiten, so erhält man eine konstante durchschnittliche Helligkeit. Zur Regelung der Synchronisation ist es besonders vorteilhaft, auf die Zellen mit der hexadezimalen Kodierung 15, 2A, 31 und 32 zu verzichten, da die Zellen mit der hexadezimalen Kodierung 15 und 2A in vertikaler Richtung, die mit der hexadezimalen Kodierung 31 und 32 in horizontaler Richtung in einer Spalte beziehungsweise Reihe gleicher Information beim Dekodieren nicht rastergenau getrennt werden können. Um die Dekodiersicherheit zu erhöhen, kann eine Auswahl der zu verwendenden Kodierungen der Zellen unter datensicherungsmäßig üblichen Gesichtspunkten, wie der Hammingdistanz, oder unter Gesichtspunkten der einfachen Erstellung oder der effektiven Realisierung der Detektoren getroffen werden.

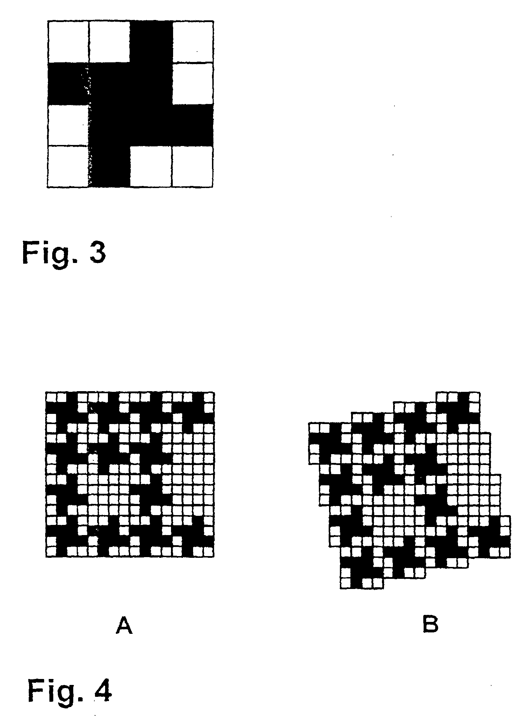

**Figur 3** zeigt ein Beispiel für eine Zellenform oder für eine Felderkodierung einer rechteckigen Zelle, die entworfen wurde, um beim Druckprozeß auslaufende Farben daran hindern zu können, mit der Farbe von Nachbarzellen zu verlaufen.

**Figur 4** zeigt die periodische Wiederholung von Zellen mit willkürlicher Information. Beispielsweise entsprechen die rein weißen Zellen dem Wert NULL, die teils schwarzen Zellen dem Wert EINS. Im Teil A der Figur 4 ist gezeigt, daß eine Sicherheit gegen das Zusammenlaufen der Druckfarbe von Nachbarzellen mit der Zelle aus Figur 3 in einem orthogonalen Koordinatensystem nur teilweise erreicht wird, während im Teil B erkennbar ist, daß bei einer Änderung des Koordinatensystems die Farbe schon sehr weit laufen müßte, damit sie Nachbarzellen verbindet.

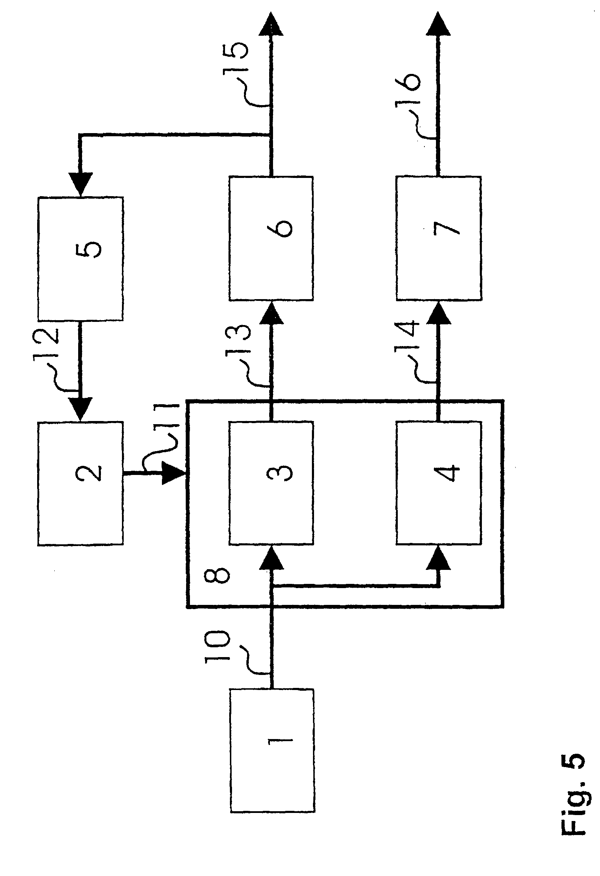

**Figur 5** zeigt schematisch die wesentlichen Teile einer Vorrichtung zur Durchführung des beanspruchten Verfahrens. Die vorzugsweise digitalisierten Sensordaten 10 des Sensors 1 werden dem Detektor 8 zugeführt und dort vom Synchronlagedekoder 3 und von der Mustererkennung 4 unter Verwendung der Detektionsparameter 11 verarbeitet. Dabei ermittelt der Synchronlagedekoder 3 die Abweichung der Istlage der Sensordaten 10 von der nächsten Synchronlage und gibt diese in Form des Synchronschlüssels 13 zur Istlageberechnung 6 weiter..Die Istlageberechnung 6 berechnet die wahrscheinliche Istlage aus den Synchronschlüsseln der zweidimensional benachbart liegenden Sensordaten und gibt das Ergebnis als Lageinformation 15 an die Parameterberechnung 5 und zur weiteren Verwendung nach außen ab. In der Mustererkennung 4 ermittelt der Detektor 8, ob eines der charakteristischen Muster und gegebenenfalls welches vorliegt und gibt den entsprechenden Musterschlüssel 14 an die Bitmusterzuordnung 7 weiter, die die auszugebende Bitfolge 16 ermittelt. In der Parameterberechnung 5 werden aus der Lageinformation 15 und den bisherigen im Parameterspeicher 2 gespeicherten Detektionsparametern die neuen Detektionsparameter 12 berechnet und im Parameterspeicher 2 gespeichert. Dort stehen sie dem Detektor 8 für den nächsten Zyklus zur Verfügung. Die Parameter für den Detektor 8 berücksichtigen unter anderem regionale Maßstabsverzerrungen, Lageverschiebungen und Verdrehungen, also solche auch kleiner Bereiche. Die Lageinformation 15 kann zur Festlegung der Adresse dienen, unter der die Bitfolge 16 in einem Ergebnisspeicher abgelegt werden kann.

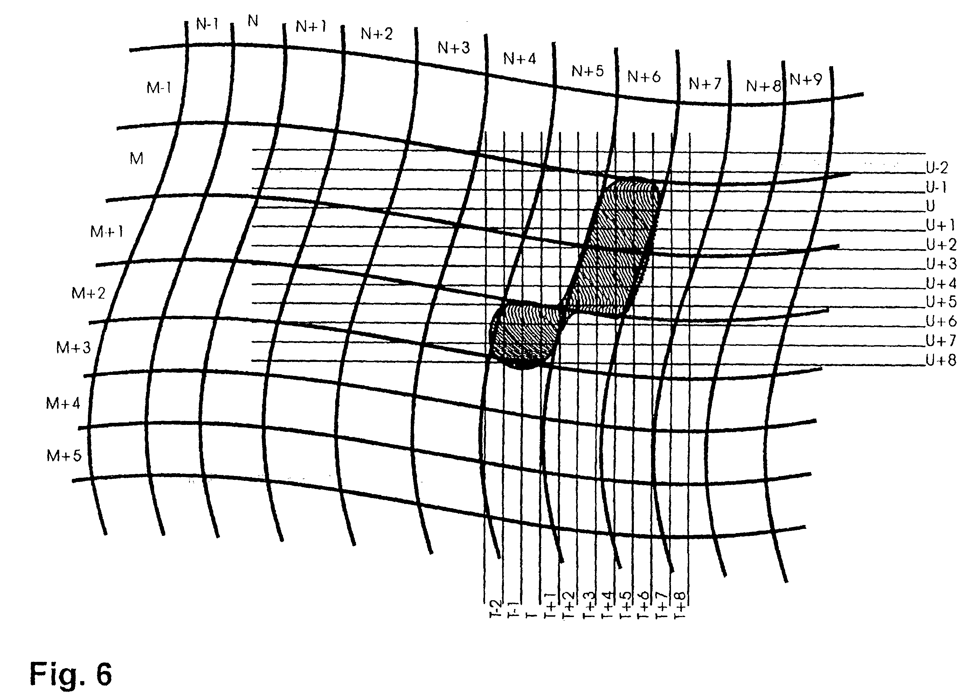

In **Figur 6** ist eine vereinfachte beispielhafte Darstellung gedruckter Zellen sowohl im Sensorkoordinatensystem als auch im Zielkoordinatensystem gezeigt. Das Sensorkoordinatensystem ist ohne Beschränkung der Allgemeinheit in dieser Darstellung willkürlich als Bezugssystem gewählt worden. Es hat als eine Dimension Spalten, von denen die hier mit T-2 bis T+8 bezeichneten dargestellt sind, in der zweiten Dimension Zeilen, von denen die hier mit U-2 bis U+8 bezeichneten dargestellt sind. Entsprechend hat das Zielkoordinatenssystem zwei Dimensionen, dargestellt sind die Spalten N-1 bis N+9 sowie die Zeilen M-1 bis M+5. Bezogen auf das Sensorkoordinatensystem ist das Zielkoordinatensystem weder gradlinig noch gleichmäßig geteilt, in sich ist es auch nicht orthogonal. Bezogen auf den Sensor ist auch die Darstellung des gedruckten Musters stark vereinfacht.

So sind die Übergänge zwischen Schwarz und Weiß höchstens auf dem Datenstreifen noch scharfkantig, die Abbildung auf den Sensor aber ist unscharf, die Breite des Übergangsbereiches liegt bei hoher Datendichte etwa in gleicher Größenordnung wie die Sensorteilung entsprechend der Teilung des Sensorkoordinatensystems.

Wird als Sensor ein Zeilensensor verwendet, so liegt die Teilung des Sensorkoordinatensystems in einer Achse durch die Einteilung der empfindlichen Flächen des Sensors fest, in der zweiten Achse wird sie beispielsweise durch die Abtastgeschwindigkeit des Sensors relativ zum Datenstreifen bestimmt, so daß inkonstante Abtastgeschwindigkeit zu einer Verzerrung führt, die jedoch mit in das Zielkoordinatensystem gerechnet und gegebenenfalls zur Regelung der Abtastgeschwindigkeit herangezogen werden kann.

Im Koordinatensystem der Ausgangsinformation, das dem Zielkoordinatensystem entsprechen soll, ist das hier schraffiert dargestellte Beispiel eines gedruckten Musters so gewählt, daß die Zellen mit den Koordinaten (M, N+6), (M+1, N+6) und (M+2, N+5) schwarz sein sollen. Dargestellt ist, wie beispielsweise durch den Druckprozeß die Kanten des gedruckten Musters nicht mit den vorgesehenen Zellengrenzen des Zielkoordinatensystems übereinstimmen. Hinzu kommt die Unschärfe der Abbildung auf den Sensor sowie die örtliche Transferfunktion des Sensors selbst.
Bei der Verarbeitung der vom Sensor ermittelten Daten, die beispielsweise den vom Sensor jedem Feld des Sensorkoordinatensystems zugewiesenen Helligkeitswerten entsprechen, werden die einzelnen Felder unterschiedlich genutzt: für das Feld (T+4, U-3) entfällt eine Nutzung, weil seine Position einer Ecke des Zielkoordinatensystems entspricht;
die Felder (T+3, U+1) und (T+4, U+1) werden zur Synchronisation der Spaltenkoordinate N+6 genutzt, weil sie einen Weiß-Schwarz-Übergang innerhalb einer Zeile des Zielkoordinatensystems darstellen;
die Felder (T, U+5) und (T, U+6) werden zur Synchronisation der Zeilenkoordinate M+2 genutzt, weil sie einen Weiß-Schwarz-Übergang innerhalb einer Spalte des Zielkoordinatensystems darstellen;
das Feld (T+5, U+1) wird als Dateninformation für die Zielkoordinate (M, N+6) genutzt, weil es weit genug von den Rändern des Zielfeldes entfernt liegt;
für die Felder (T+4, U+2) und (T+4, U+3) entfällt eine Nutzung, da kein Schwarz-Weiß-Übergang beziehungsweise Weiß-Schwarz-Übergang vorliegt, der zur Synchronisierung herangezogen werden konnte.

Entsprechend können die ausreichend weit innerhalb einer Zeile des Zielkoordinatensystems liegenden Farbübergänge zur Spaltensynchronisation, die ausreichend weit innerhalb einer Spalte des Zielkoordinatensystems liegenden zur Zeilensynchronisation des Zielkoordinatensystems beitragen und die ausreichend weit innerhalb von Zeile und Spalte des Zielkoordinatensystems liegenden Felder des Sensorkoordinatensystems zur Datenbestimmung der entsprechenden Zelle genutzt werden.

Wird mit hoher Datendichte gearbeitet. so sind die Zellen des Zielkoordinatensystems relativ klein, die Felder des Sensorkoordinatensystems noch kleiner. Sollen die Daten eines Datenstreifens in kurzer Zeit ausgelesen werden, so muß das mit hoher Frequenz erfolgen, beispielsweise mit einer Lesegeschwindigkeit von mehreren Millionen Sensorfeldern pro Sekunde.

Bei dem erfindungsgemäßen Verfahren können davon allein durch eine ausreichend gute Synchronisation die Sensorfelder festgestellt werden, die zur Synchronisation oder zur Datenfestlegung beitragen können, beispielsweise die, die in einer Zelle des Zielkoordinatensystems den Zellenkantenmitten beziehungsweise der Zellenmitte am nächsten liegenden fünf Sensorfelder.
Bei Berücksichtigung der Nachbarzellen läßt sich die durchschnittliche Anzahl zu berücksichtigender Sensorfelder pro Zelle noch erheblich weiter absenken. Sind z. B. zwei benachbarte Zellen von gleicher Farbe, so entfällt der Farbübergang. Noch weiter absenken läßt sich die Anzahl zu berücksichtigender Sensorfelder pro Zelle dadurch, daß in den Bereichen, in denen die zur Synchronisation einer Dimension, beispielsweise der Zeile des Zielkoordinatensystems, heranziehbaren Felder sehr dicht liegen, nur eine Untermenge von ihnen tatsächlich zur Synchronisation herangezogen wird.

Werden die Sensorwerte, beispielsweise die Helligkeit der Sensorfelder, analog oder digital mit mehr als einem Bit aufgelöst verarbeitet, so können die Koordinaten eines Helligkeitsübergangs aus den Helligkeitswerten der zugehörigen Sensorfelder nicht nur auf Kanten des Sensorkoordinatensystems bezogen, sondern noch weiter aufgelöst werden. Entsprechend kann die Datenfestlegung durch diejenige Sensorzelle erfolgen, die von den nicht in der Nähe des Zellenrandes liegenden Sensorzellen den extremen, also maximalen beziehungsweise minimalen Helligkeitswert aufweist.

Bei der Verarbeitung binärer Helligkeitswerte, also einer Auflösung von nur einem Bit, können die Koordinaten eines Helligkeitsübergangs zunächst nur auf Kanten des Sensorkoordinatensystems bezogen werden. Es können jedoch auch dann die Positionen der Zellengrenzen genauer abgeschätzt werden, indem benachbarte Helligkeitsübergänge mit einbezogen werden, etwa im in Figur 6 dargestellten Beispiel durch gemeinsame Berücksichtigung der Übergänge (T+3, U+1)-(T+4, U+1) und (T+2, U+4)-(T+3, U+4) und (T+1, U+7)-(T+2, U+7). Entsprechend kann die Datenfestlegung durch Mittelwertbildung der Helligkeitswerte der nicht in der Nähe des Zellenrandes liegenden Sensorzellen mit Grenzwertabfrage erfolgen.

Der Prozeß einer Abbildung des vorgefundenen Sensorkoordinatensystems auf das gewünschte Zielkoordinatensystem kann in Form eines zweidimensionalen polygonalen Netzes, wie es für Finite-Elemente-Verfahren verwendet wird, durch zweidimensionale Splines oder durch mehrdimensionale Approximations-Verfahren erfolgen.

Die für das Abspeichern der ermittelten Daten erforderlichen Koordinaten des Zielkoordinatensystems sind in der Regel ganzzahlig. Dennoch kann es vorteilhaft sein, die Position von Sensorfeldern im Zielkoordinatensystem höher aufzulösen. Wenn mit x die Spalte und mit y die Zeile im Sensorkoordinatensystem, mit a die Spalte und mit b die Zeile im Zielkoordinatensystem bezeichnet werden, so kann die Abbildung vom Sensorkoordinatensystem in das Zielkoordinatensystem durch zwei Vorschriften f und g mit a=f(x, y) und b=g(x,y) erreicht werden. Diese Vorschriften können unter anderem Polygone, Polynome, Bezierkurven oder B-Splines sein, aber auch schrittweise Verfahren.

Bei Verwendung eines Zeilensensors werden die Helligkeitswerte der Felder einer Sensorzeile gleichzeitig erfaßt und sequentiell mit hoher Frequenz der Weiterverarbeitung zugeleitet. In diesem Falle ist es vorteilhaft, zu Beginn der Verarbeitung der Helligkeitswerte einer Sensorzeile die Vorschriften fy und gy mit a=fy(x) und b=gy(x) aus den Vorschriften f und g zu bilden, die dann nur noch von einer Variablen x abhängen.

Vorteilhaft wird auch, eine rein inkrementale Auswertung der Vorschriften fy und gy angemessen berücksichtigt, da die Helligkeitswerte sequentiell eintreffen. Bei entsprechender Realisierung der Vorschriften kann die Entscheidung, ob für ein Feld die Verwendung seines Helligkeitswertes eine und gegebenenfalls welche Bedeutung hat, von einzelnen Bits einer digitalen Darstellung der Werte a(x, y) und b(x, y) bestimmbar gemacht werden. So könnten die Kombination 00 für die ersten beiden Nachkommabits für vordere Randlage, die Kombination 11 für hintere Randlage und die Kombinationen 01 und 10 für Mittenlage stehen. Zur Synchronisation würden dann beispielsweise nur Sensorfelder mit Kombinationen herangezogen, die bei einer Dimension Mittenlage, bei der anderen Randlage anzeigen, zur Datenbestimmung nur solche, die in beiden Dimensionen Mitteniage in einer Zelle des Zielkoordinatensystems aufweisen.

Werden Digitale Signalprozessoren eingesetzt, so können die zu den Verfahren gehörenden Vorschriften in Gleitkommaarithmetik oder in Festkommaarithmetik realisiert werden. Es kann vorteilhaft sein, Teile der Verfahren im Sinne von Abbildungsvorgängen auf Tabellenverarbeitung zu stützen. Um den benötigten Speicherplatz möglichst gering zu halten, kann auf das Speichern nicht benötigter oder nicht mehr benötigter Helligkeitswerte von Sensorfeldern verzichtet werden. Gleichzeitig wird damit die Verarbeitung auf das erforderliche Maß reduziert.

Um das Einschwingen des Prozesses zu Beginn der Abtastung eines Datenstreifens zu erleichtern, kann die Abbildung durch geeignete Schätzung der Prozeßparameter unterstützt werden. Entsprechend der örtlichen Dichte der Synchronisationsinformationen können regelungstechnische Verfahren zur Fortführung und Regelung der Abbildung verwendet werden, wie Glättung, Mittelwertbildung, Störgrößenaufschaltung oder adaptive Regelung.

Die in den Figuren als Schwarz oder Weiß dargestellten Flächen können natürlich gegeneinander vertauscht werden. Schwarz bedeutet geringe Helligkeit des Bildes des Datenstreifens auf dem Sensor, Weiß hohe Helligkeit, jeweils bezogen auf das vom Sensor ausgewertete Farbspektrum. So können für den Menschen gleich hell wirkende Farben für den Sensor aufgrund von Filtern oder farbiger Beleuchtung des Datenstreifens unterschiedlich hell wirken.

Werden die Zellen in Felder aufgeteilt und mit vorgegebenen Mustern gefüllt, so können die Betrachtungen bezüglich der Synchronisierung auf die inneren Strukturen der Zellen erweitert werden. Beim Vergleich einer Zelle mit den vorgesehenen möglichen Mustern, beispielsweise in Form einer zweidimensionalen Kreuzkorrelation, kann das Muster mit der höchsten Übereinstimmung, entsprechend dem größten Korrelationskoeffizienten, die zum Muster gehörende mehrere Bits umfassende Dateninformation, einer dritten Dimension der Zelle entsprechend, festlegen, die bei der zweidimensionalen Kreuzkorrelation ermittelte Position mit dem größten Korrelationskoeffizienten als Zellenmittenposition in das Synchronisationsverfahren einbezogen werden. Durch entsprechende Auswahl der vorzusehenden aus den insgesamt möglichen Mustern wird sichergestellt, daß jede Zelle zur Synchronisierung beitragen kann. Es sind binäre, digitale oder analoge Helligkeitswerte verwendbar.

Werden binäre Helligkeitswerte verwendet, so können die notwendigen Vergleiche auch besonders einfach durch direkten Tabellenzugriff ersetzt werden. Dabei wird die für den Tabellenzugriff benötigte Adresse aus den Helligkeitswerten, also nur einzelnen Bits, der in den Vergleich einzubeziehenden Felder des Sensorkoordinatensystems zusammengesetzt beziehungsweise nach einem Algorithmus gebildet, während in der Tabelle unter der jeweiligen Adresse verschiedene Ergebniswerte, wie beispielsweise eine Feldmittenkoordinate, die gesuchte Dateninformation und/oder eine Qualitätskennung zur Abschätzung der Wahrscheinlichkeit einer korrekten Dateninformation, eingetragen sind. Mit letzterem läßt sich ein Einfluß auf den Synchronisationsprozeß geeignet gewichten und ein Fehlerkorrekturalgorithmus zur Überprüfung beziehungsweise Korrektur von Übertragungsfehlern verbessern. Die Tabelle kann adaptiv verändert, beispielsweise an eine sich ändernde Teilung des Zielkoordinatensystems oder eine sich ändernde Helligkeit des Datenstreifens angepaßt werden.

## Patentansprüche

1. Verfahren zur Synchronisation bei der Dekodierung von auf Datenstreifen mit hoher Datendichte in zweidimensional auf dem Datenstreifen positionierten Zellen abgelegter Speicherinformation mit Hilfe eines Flächen- oder Zeilensensors, **dadurch gekennzeichnet, daß**
a) eine Vorschrift gebildet wird, die die relative Lage der Felder des Sensors in Bezug auf die Position der Zellen beschreibt;
b) die Vorschrift mittels der von durch Sensorsignale der Sensorfelder ermittelbaren relativen Lage von Kanten oder inneren Strukturen der Zellen fortlaufend in beiden Dimensionen nachgeführt wird.

2. Verfahren nach Anspruch 1, **dadurch gekennzeichnet, daß** der Informationsgehalt einer Zelle von dem Sensorsignal eines anhand der Vorschrift auszuwählenden Sensorfeldes ermittelt wird.

3. Verfahren nach Anspruch 1, **dadurch gekennzeichnet, daß** der Informationsgehalt einer Zelle von dem Sensorsignal mehrerer anhand der Vorschrift auszuwählender Sensorfelder ermittelt wird.

4. Verfahren nach Anspruch 3, **dadurch gekennzeichnet, daß** der Informationsgehalt einer Zelle mehrere Datenbits umfaßt.

5. Vorrichtung zur Durchführung eines Verfahrens nach mindestens einem, der Ansprüche 1 bis 4, **dadurch gekennzeichnet, daß** die Sensordaten einem Detektor zugeführt werden, der daraus die Lage einer Zelle in Bezug auf das Sensorkoordinatensystem und ihren Informationsgehalt ermittelt.

6. Vorrichtung nach Anspruch 5, **dadurch gekennzeichnet, daß** die Vorrichtung ausgestattet ist mit einem Sensor, der zur Abtastung des Datenstreifens bewegbar ist, einem Mittelwertbilder zur Mittelung der Sensorkoordinaten einer Reihe oder Spalte des Datenstreifens, mit einem Speicher zur Abspeicherung des Mittelwertes, mit einem Subtrahierer zur Bildung der Differenz zwischen dem zuletzt gebildeten und dem vorher abgespeicherten Mittelwert und einer Regeleinrichtung zur Regelung der Abtastgeschwindigkeit, der die gebildete Differenz zugeführt werden kann.

## Claims

1. Method for synchronization in the decoding of information stored on data strips having a high data density, in cells positioned two-dimensionally on the said data strip, using a surface or line sensor, **characterized in that**
a) a specification is established describing the relative position of the fields of the sensor in relation to the position of the cells,
b) the specification is continuously corrected in both dimensions using the relative position of the edges or inner structures of the cells, determined by using the sensor signals of the sensor fields.

2. Method according to claim 1, **characterized in that** the information content of a cell is determined by the sensor signal of a sensor field to be selected on the basis of the specification.

3. Method according to claim 1, **characterized in that** the information content of a cell is determined by the sensor signal of a plurality of sensor fields to be selected on the basis of the specification.

4. Method according to claim 3, **characterized in that** the information content of a cell comprises a plurality of data bits.

5. Device for performing a process according to at least one of claims 1 to 4, **characterized in that** the sensor data are supplied to a detector, which determines from the latter the position of a cell in relation to the sensor coordinate system and its information content.

6. Device according to claim 5, **characterized in that** the device comprises a sensor, movable for scanning the data strip, a mean value producing means for centering the sensor coordinates of a row or column of the data strip, a storage means for storing the mean value, a subtracter for producing the difference between the last produced and the previously stored mean value and a control means for controlling the scan rate, to which the produced difference may be fed.

## Revendications

1. Procédé pour la synchronisation lors du décodage d'informations mémoire déposées sur des bandes de données à haute densité de données dans des cellules positionnées à deux dimensions sur la bande de données à l'aide d'un capteur de surface ou de ligne, **caractérisé en ce que**
a) une règle est formée, laquelle décrit la position relative des champs du capteur par rapport à la position des cellules ;
b) la règle est poursuivie en continu dans les deux dimensions au moyen de la position relative de bords ou de structures internes des cellules déterminable par les signaux de capteur des champs de capteur.

2. Procédé selon la revendication 1, **caractérisé en ce que** le contenu en informations d'une cellule est déterminé par le signal du capteur d'un champ de capteur à sélectionner à l'aide de la règle.

3. Procédé selon la revendication 1, **caractérisé en ce que** le contenu en informations d'une cellule est déterminé par le signal du capteur de plusieurs champs de capteurs à sélectionner à l'aide de la règle.

4. Procédé selon la revendication 3, **caractérisé en ce que** le contenu en informations d'une cellule comprend plusieurs bits de données.

5. Dispositif pour la réalisation d'un procédé suivant au moins l'une des revendications 1 à 4, **caractérisé en ce que** les données du capteur sont amenées à un détecteur qui, à partir de ces données, détermine la position d'une cellule par rapport au système de coordonnées du capteur et son contenu en informations.

6. Dispositif selon la revendication 5, **caractérisé en ce que** le dispositif est équipé d'un capteur déplaçable pour le balayage de la bande de données, d'un générateur de moyenne pour la formation de la moyenne des coordonnées du capteur d'une rangée ou d'une colonne de la bande de données, d'une mémoire pour la mémorisation de la valeur moyenne, d'un soustracteur pour la formation de la différence entre la valeur moyenne formée en dernier et la valeur moyenne mémorisée au préalable, et d'un dispositif de réglage pour le réglage de la vitesse de balayage, auquel la différence formée peut être amenée.
